# EUROPEAN PATENT APPLICATION

(11) **EP 4 790 888 A1**
(43) Veröffentlichungstag der Anmeldung: **12.08.2026**
(21) Anmeldenummer: 23954619.5
(22) Anmeldetag: 07.10.2023
(51) Int. Cl.: H02P 1/10, H02P 1/02, H02P 1/18, H02M 1/36, H02M 1/34

(54) **STEUERUNGSSYSTEM UND STEUERUNGSVERFAHREN**

(71) Anmelder: Schaeffler Technologies AG & Co. KG, 91074 Herzogenaurach (DE)
(72) Erfinder: HUANG, Rui, Shanghai 201804 (CN); ZHANG, Xiaoliang, Shanghai 201804 (CN)
(74) Vertreter: Schaeffler Technologies
(86) Internationale Anmeldenummer: PCT/CN2023/123175
(87) Internationale Veröffentlichungsnummer: WO 2025/073106

(57) **Zusammenfassung**

Ausführungsformen der vorliegenden Anmeldung stellen ein Steuersystem und ein Steuerverfahren bereit. Das Steuersystem umfasst: ein Initialisierungssteuermodul, das dazu konfiguriert ist, eine erste Zeit zu bestimmen, die eine Motorsteuereinheit vom Einschalten mit einer Versorgungsspannung bis zum Abschluss einer Initialisierung benötigt; ein Ladesteuermodul, das dazu konfiguriert ist, eine zweite Zeit zu bestimmen, die ein Ausgangskondensator der Motorsteuereinheit vom Beginn eines Ladevorgangs bis zum vollständigen Aufladen benötigt, wobei der Ladevorgang des Ausgangskondensators beginnt, sobald die Motorsteuereinheit in die Initialisierung eintritt; und ein Gesamtzeitbestimmungsmodul, das dazu konfiguriert ist, die größere der ersten Zeit und der zweiten Zeit als Gesamtzeit für die Initialisierung der Motorsteuereinheit und das Laden des Ausgangskondensators zu verwenden.

## Beschreibung

### Technisches Gebiet

Die vorliegende Anmeldung betrifft das Gebiet der Schaltungstechnik, genauer gesagt Steuersysteme und Steuerverfahren.

### Hintergrund der Erfindung

In Schaltungen zur Steuerung von Fahrzeugmotoren wandelt die Gleichrichterschaltung Wechselstrom (AC) in Gleichstrom (DC) um. Nach der Gleichrichterschaltung ist ein Ausgangskondensator mit hoher Kapazität anzuschließen. Einerseits werden dessen Lade- und Entladeeigenschaften genutzt, um die gleichgerichtete, gepulste Gleichspannung in eine stabile Gleichspannung umzuwandeln und die schädlichen Wechselstromanteile gegen Masse abzuleiten. Andererseits wird die im Ausgangskondensator gespeicherte Energie verwendet, um den beim Anlauf des Motors erforderlichen hohen Strom bereitzustellen, wodurch ein schnellerer Einschwingvorgang und ein ruhigerer Motorlauf erreicht werden.

Mit steigender Motorleistung erhöht sich die erforderliche Kapazität des Ausgangskondensators, wodurch sich die Ladezeit verlängert. Nach dem Einschalten der Motorsteuereinheit (MCU) muss diese initialisiert werden, eine Systemfehlerdiagnose durchgeführt und ein Selbsttest durchgeführt werden, bevor die nachfolgenden Systeme ordnungsgemäß arbeiten können. Aufgrund der zunehmenden Komplexität von Automobilelektronikprodukten nimmt der Umfang der Selbsttests zu, und auch die Startzeit der MCU verlängert sich. Die kumulierte Zeit dieser Vorgänge kann die Systemanforderungen überschreiten, was zu Fehlfunktionen des Systems führt.

### Gegenstand der Erfindung

In einer Ausführungsform der vorliegenden Anmeldung wird ein Steuersystem bereitgestellt, das Folgendes umfasst: ein Initialisierungssteuermodul, das dazu konfiguriert ist, eine erste Zeit zu bestimmen, die die Motorsteuereinheit benötigt, um nach dem Anlegen der Versorgungsspannung die Initialisierung abzuschließen; ein Ladesteuermodul, das dazu konfiguriert ist, eine zweite Zeit zu bestimmen, die der Ausgangskondensator der Motorsteuereinheit vom Beginn des Ladevorgangs bis zur vollständigen Aufladung benötigt, wobei der Ladevorgang des Ausgangskondensators beginnt, sobald die Motorsteuereinheit in die Initialisierung eintritt; sowie ein Modul zur Bestimmung der Gesamtzeit, das dazu konfiguriert ist, die größere der ersten Zeit und der zweiten Zeit als Gesamtzeit für die Initialisierung der Motorsteuereinheit und das Laden des Ausgangskondensators festzulegen.

In einigen Ausführungsformen umfasst das Ladesteuermodul: ein Lademodul, das dazu konfiguriert ist, unter Nutzung der Body-Diode eines Leistungstransistors des Ladesteuermoduls den Ausgangskondensator mit der Versorgungsspannung initial zu laden und bis zu einer ersten Schwellenspannung aufzuladen; sowie ein Aufwärtswandlermodul, das dazu konfiguriert ist, bei Erreichen der ersten Schwellenspannung die vom Lademodul an den Ausgangskondensator angelegte Ladespannung zu erhöhen, um eine erhöhte Spannung zu erzeugen, wobei die erhöhte Spannung bewirkt, dass der Leistungstransistor vollständig durchgeschaltet wird. Das Lademodul ist ferner dazu konfiguriert, unter Nutzung des vollständig durchgeschalteten Leistungstransistors den Ausgangskondensator ab der ersten Schwellenspannung weiterhin mit der Versorgungsspannung zu laden, bis der Ausgangskondensator vollständig geladen ist. Die Summe aus der initialen Ladezeit und der fortgesetzten Ladezeit bildet die zweite Zeit. Dabei ist die Versorgungsspannung größer oder gleich der Durchlassspannung der Body-Diode des Leistungstransistors, jedoch kleiner als die zum vollständigen Durchschalten des Leistungstransistors erforderliche Spannung, und die erhöhte Spannung ist größer oder gleich der zum vollständigen Durchschalten des Leistungstransistors erforderlichen Spannung.

In einigen Ausführungsformen umfasst das Lademodul: einen ersten Leistungstransistor, der als Leistungsschalter dient und einen ersten Anschluss, einen zweiten Anschluss und einen dritten Anschluss aufweist, wobei der erste Anschluss des ersten Leistungstransistors zum Empfangen einer Versorgungsspannung vorgesehen ist, der zweite Anschluss des ersten Leistungstransistors eine Ladespannung an einen Ausgangskondensator bereitstellt und der dritte Anschluss des ersten Leistungstransistors zum Empfangen einer erhöhten Spannung vorgesehen ist; einen ersten Widerstand und eine erste Diode, die parallel zueinander geschaltet sind und zwischen dem ersten Anschluss und dem dritten Anschluss des ersten Leistungstransistors verbunden sind, wobei eine Anode der ersten Diode mit dem ersten Anschluss des ersten Leistungstransistors verbunden ist und eine Kathode der ersten Diode mit dem dritten Anschluss des ersten Leistungstransistors verbunden ist; sowie einen zweiten Widerstand, der zwischen dem zweiten Anschluss und dem dritten Anschluss des ersten Leistungstransistors verbunden ist.

In einigen Ausführungsformen ist der erste Leistungstransistor ein Metalloxid-Halbleiter-(MOS)-Transistor, wobei der erste Anschluss des ersten Leistungstransistors einen Source-Anschluss des MOS-Transistors bildet, der zweite Anschluss des ersten Leistungstransistors einen Drain-Anschluss des MOS-Transistors bildet und der dritte Anschluss des ersten Leistungstransistors einen Gate-Anschluss des MOS-Transistors bildet.

In einigen Implementierungen ist der erste Leistungstransistor ein NMOS-Transistor.

In einigen Ausführungsformen umfasst das Aufwärtswandlermodul: einen Eingangsanschluss, der dazu konfiguriert ist, die vom zweiten Anschluss des ersten Leistungstransistors bereitgestellte Ladespannung zu empfangen; ein Umwandlungsmodul, das dazu konfiguriert ist, eine Spannungsanhebung der Ladespannung durchzuführen; sowie einen Ausgangsanschluss, der dazu konfiguriert ist, die erhöhte Spannung an den dritten Anschluss des ersten Leistungstransistors auszugeben.

In einigen Implementierungen ist die erste Schwellenspannung die minimale Betriebsspannung des Umwandlungsmoduls.

In einigen Ausführungsformen umfasst das Initialisierungssteuermodul: einen zweiten Leistungstransistor, der einen ersten Anschluss, einen zweiten Anschluss und einen dritten Anschluss aufweist, wobei der erste Anschluss des zweiten Leistungstransistors zum Empfangen einer Versorgungsspannung vorgesehen ist und der zweite Anschluss des zweiten Leistungstransistors über eine zweite Diode und einen dritten Widerstand ein Signal bereitstellt, das anzeigt, dass die Motorsteuereinheit die Initialisierung abgeschlossen hat; sowie einen dritten Leistungstransistor, der einen ersten Anschluss, einen zweiten Anschluss und einen dritten Anschluss aufweist, wobei der erste Anschluss des dritten Leistungstransistors über einen vierten Widerstand mit dem dritten Anschluss des zweiten Leistungstransistors verbunden ist, der zweite Anschluss des dritten Leistungstransistors geerdet ist und der dritte Anschluss des dritten Leistungstransistors über einen fünften Widerstand ein Signal empfängt, das anzeigt, dass die Motorsteuereinheit gestartet wird.

In einigen Ausführungsformen ist der zweite Leistungstransistor ein PNP-Transistor, wobei der erste Anschluss des zweiten Leistungstransistors den Emitter, der zweite Anschluss den Kollektor und der dritte Anschluss die Basis des PNP-Transistors bildet.

In einigen Ausführungsformen ist der dritte Leistungstransistor ein NPN-Transistor, wobei der erste Anschluss des dritten Leistungstransistors den Kollektor, der zweite Anschluss den Emitter und der dritte Anschluss die Basis des NPN-Transistors bildet.

In einigen Ausführungsformen umfasst der Ausgangskondensator einen ersten und einen zweiten Kondensator, die parallel zwischen dem zweiten Anschluss des ersten Leistungstransistors und Masse geschaltet sind.

In einigen Ausführungsformen ist der Ausgangskondensator vollständig geladen, sobald die Ladespannung eine zweite Schwellenspannung erreicht oder überschreitet. Diese zweite Schwellenspannung ist höher als die erste Schwellenspannung.

In einer Ausführungsform dieser Anmeldung wird eine Motorsteuereinheit bereitgestellt, die das Steuersystem gemäß den oben genannten Ausführungen umfasst.

In einer Ausführungsform dieser Anmeldung wird ein Steuerverfahren bereitgestellt, das Folgendes umfasst: Bestimmen einer ersten Zeit, die die Motorsteuereinheit benötigt, um die Initialisierung nach dem Einschalten mit Versorgungsspannung abzuschließen; Bestimmen einer zweiten Zeit, die der Ausgangskondensator der Motorsteuereinheit benötigt, um ab Ladebeginn vollständig geladen zu sein, wobei der Ladevorgang des Ausgangskondensators mit dem Eintritt der Motorsteuereinheit in die Initialisierung beginnt; und Festlegen der längeren der beiden Zeiten als Gesamtzeit für die Initialisierung der Motorsteuereinheit und das Laden des Ausgangskondensators.

In einigen Ausführungsformen umfasst die Bestimmung der zweiten Zeit Folgendes: Nutzung der Body-Diode des Leistungstransistors des Ladesteuermoduls, um den Ausgangskondensator mit der Versorgungsspannung initial zu laden und bis zu einer ersten Schwellenspannung aufzuladen; Erhöhung der Ladespannung des Lademoduls am Ausgangskondensator, sobald dieser die erste Schwellenspannung erreicht hat, um eine erhöhte Spannung zu erzielen, wobei die erhöhte Spannung den Leistungstransistor vollständig durchschaltet; Nutzung des vollständig durchgeschalteten Leistungstransistors, um den Ausgangskondensator ab der ersten Schwellenspannung weiterhin mit der Versorgungsspannung zu laden, bis er vollständig geladen ist, wobei die Summe der anfänglichen Ladezeit und der fortgesetzten Ladezeit die zweite Zeit ergibt; wobei die Versorgungsspannung größer oder gleich der Durchlassspannung der Body-Diode des Leistungstransistors und kleiner als die zum vollständigen Durchschalten des Leistungstransistors erforderliche Spannung ist, und die erhöhte Spannung größer oder gleich der zum vollständigen Durchschalten des Leistungstransistors erforderlichen Spannung ist.

In einigen Ausführungsformen umfasst das Steuerverfahren dieser Ausführungsform ferner Folgendes: Feststellung, ob die Ladung des Ausgangskondensators abgeschlossen ist, basierend auf einem Vergleich der Ladespannung mit der zweiten Schwellenspannung, wobei die zweite Schwellenspannung höher als die erste Schwellenspannung ist.

Gemäß dem Steuersystem und Steuerverfahren der Ausführungsform der vorliegenden Anmeldung wird während des Initialisierungsprozesses der Motorsteuereinheit die Body-Diode des Leistungstransistors im Lademodul verwendet, um den Ausgangskondensator zu laden. Sobald der Ausgangskondensator einen vorgegebenen Wert erreicht hat, wird ein peripheres Steuersignal so gesteuert, dass der Leistungstransistor vollständig leitend wird, und der Ausgangskondensator wird weiterhin geladen, bis er vollständig aufgeladen ist. Basierend auf dieser Lösung kann die Gesamtzeit für die Initialisierung der Motorsteuerung und das Laden des Ausgangskondensators reduziert werden, sodass die Systemanforderungen erfüllt werden können.

### Beschreibung der Figuren

Um die technischen Lösungen der Ausführungsbeispiele der vorliegenden Anmeldung klarer zu erläutern, werden im Folgenden die Zeichnungen, die die Ausführungsbeispiele der vorliegenden Anmeldung betreffen, kurz beschrieben. Für den Fachmann auf diesem Gebiet sind auf der Grundlage dieser Zeichnungen weitere Zeichnungen ableitbar, ohne dass dafür schöpferischer Aufwand erforderlich ist. In den Zeichnungen:
Fig. 1 zeigt ein schematisches Schaltbild eines herkömmlichen Steuersystems.
Fig. 2 zeigt ein Steuerungssequenzdiagramm des herkömmlichen Steuersystems in Fig. 1.
Fig. 3 zeigt ein schematisches Blockdiagramm des Steuersystems gemäß einem Ausführungsbeispiel der vorliegenden Anmeldung.
Fig. 4 zeigt ein schematisches Blockdiagramm des Ladesteuermoduls gemäß einem Ausführungsbeispiel der vorliegenden Anmeldung.
Fig. 5 zeigt ein schematisches Schaltbild des Steuersystems gemäß einem Ausführungsbeispiel der vorliegenden Anmeldung.
Fig. 6 zeigt ein Steuerungssequenzdiagramm zum Implementieren der Steuerung durch ein Steuersystem gemäß einer Ausführungsform der vorliegenden Anmeldung.
Fig. 7 zeigt ein Ersatzschaltbild der Ladeschaltung für den Ausgangskondensator.
Fig. 8 zeigt ein schematisches Flussdiagramm des Steuerverfahrens gemäß einem Ausführungsbeispiel der vorliegenden Anmeldung.
Fig. 9 zeigt ein Flussdiagramm zur Bestimmung der Ladezeit des Ausgangskondensators gemäß dem Steuerverfahren der Ausführungsform der vorliegenden Anmeldung.

### Detaillierte Ausführungsformen

Nachfolgend werden die Merkmale und beispielhaften Ausführungsformen der verschiedenen Aspekte der vorliegenden Anmeldung detailliert beschrieben. Um die Zwecke, Lösungen und Vorteile der vorliegenden Anmeldung klarer zu machen, werden die Details der vorliegenden Anmeldung im Folgenden in Verbindung mit den Zeichnungen und spezifischen Ausführungsbeispielen weiter detailliert beschrieben. Es versteht sich, dass die hier beschriebenen spezifischen Ausführungsbeispiele nur zur Erläuterung der vorliegenden Anmeldung dienen und nicht dazu gedacht sind, die vorliegende Anmeldung einzuschränken. Für den Fachmann auf diesem Gebiet kann die vorliegende Anmeldung ohne einige dieser spezifischen Details implementiert werden. Die folgende Beschreibung der Ausführungsbeispiele dient lediglich dazu, ein besseres Verständnis der vorliegenden Anmeldung durch die Darstellung von Beispielen der vorliegenden Anmeldung zu vermitteln.

Es ist zu beachten, dass in diesem Text relationale Begriffe wie "erster", "zweiter", "dritter" usw. nur dazu verwendet werden, eine Entität oder Operation von einer anderen Entität oder Operation zu unterscheiden, und nicht notwendigerweise eine tatsächliche Beziehung oder Reihenfolge zwischen diesen Entitäten oder Operationen erfordern oder implizieren. Des Weiteren sollen die Begriffe "umfassen", "beinhalten" und jede andere Variante davon eine nicht-ausschließliche Einbeziehung abdecken, und ein Prozess, ein Verfahren, ein Gegenstand oder eine Vorrichtung, die eine Reihe von Elementen umfasst, umfasst nicht nur diese Elemente, sondern auch andere nicht ausdrücklich aufgeführte Elemente oder Elemente, die für einen solchen Prozess, ein solches Verfahren, einen solchen Gegenstand oder eine solche Vorrichtung inhärent sind. Ohne weitere Einschränkungen schließt ein Element, das durch den Satz "umfasst ein..." definiert wird, nicht aus, dass in dem Prozess, dem Verfahren, dem Gegenstand oder der Vorrichtung, die das Element umfasst, zusätzliche Elemente vorhanden sind.

Wie bereits erwähnt, ist es beim Entwurf von Motorsteuerschaltungen für Kraftfahrzeuge normalerweise erforderlich, einen Ausgangskondensator mit großer Kapazität anzuschließen, um die Spannung zu stabilisieren und ein sofortiges Einschwingverhalten zu ermöglichen. Anschließend muss zunächst der Ausgangskondensator vorgeladen werden. Aufgrund der langen Ladezeit des Ausgangskondensators können die Systemanforderungen jedoch möglicherweise nicht erfüllt werden.

Vor diesem Hintergrund stellt diese Anmeldung ein Steuersystem und ein Steuerverfahren bereit. Nachfolgend erfolgt eine detaillierte Beschreibung unter Bezugnahme auf die beigefügten Zeichnungen.

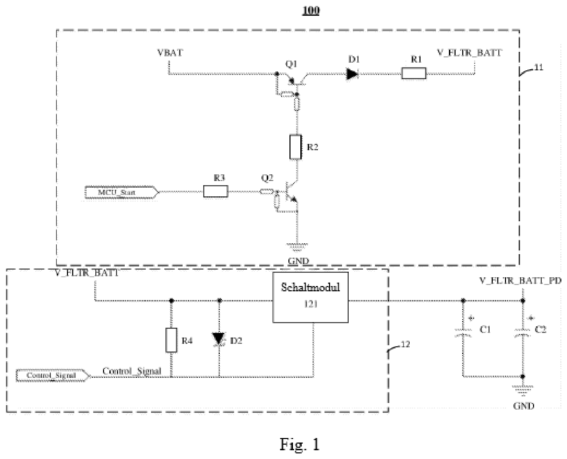

Fig. 1 zeigt ein schematisches Schaltbild eines herkömmlichen Steuersystems. Wie in Fig. 1 dargestellt, umfasst das herkömmliche Steuersystem 100 ein Initialisierungssteuermodul 11 und ein Ladesteuermodul 12.

Das Initialisierungssteuermodul 11 umfasst: einen ersten Leistungstransistor Q1 mit einem ersten Anschluss, einem zweiten Anschluss und einem dritten Anschluss, wobei der erste Anschluss des ersten Leistungstransistors Q1 zum Empfangen der Versorgungsspannung VBAT der Motorsteuereinheit dient, der zweite Anschluss des ersten Leistungstransistors Q1 über eine erste Diode D1 und einen ersten Widerstand R1 ein erstes Steuersignal bereitstellt, wobei das erste Steuersignal anzeigt, dass die Motorsteuereinheit die Initialisierung abgeschlossen hat; sowie einen zweiten Leistungstransistor Q2 mit einem ersten Anschluss, einem zweiten Anschluss und einem dritten Anschluss, wobei der erste Anschluss des zweiten Leistungstransistors Q2 über einen zweiten Widerstand R2 mit dem dritten Anschluss des ersten Leistungstransistors Q1 verbunden ist, der zweite Anschluss des zweiten Leistungstransistors Q2 mit Masse GND verbunden ist und der dritte Anschluss des zweiten Leistungstransistors Q2 über einen dritten Widerstand R3 ein zweites Steuersignal MCU_Start empfängt, das den Start der Motorsteuereinheit anzeigt. Es versteht sich, dass in Fig. 1 in der Nähe des ersten Leistungstransistors Q1 und des zweiten Leistungstransistors Q2 jeweils zwei kleine Widerstände dargestellt sind, die die internen Widerstände der entsprechenden Leistungstransistoren darstellen. Der erste Leistungstransistor Q1 ist ein PNP-Transistor und der zweite Leistungstransistor Q2 ist ein NPN-Transistor.

Das Ladesteuermodul 12 umfasst: ein Schaltmodul 121 mit einem ersten Anschluss, einem zweiten Anschluss und einem dritten Anschluss, wobei der erste Anschluss des Schaltmoduls 121 zum Empfangen des vom Initialisierungssteuermodul 11 bereitgestellten ersten Steuersignals V_FLRT_BATT dient, der zweite Anschluss des Schaltmoduls 121 eine Ladespannung V_FLRT_BATT_PD zum Laden des Ausgangskondensators (C1, C2) bereitstellt und der dritte Anschluss des Schaltmoduls 121 zum Empfangen eines dritten Steuersignals Control_Signal zum Einschalten des Schaltmoduls 121 dient; sowie einen vierten Widerstand R4 und eine zweite Diode D2, die parallel geschaltet sind und zwischen dem ersten Anschluss und dem dritten Anschluss des Schaltmoduls 121 verbunden sind. Das Schaltmodul 121 kann mit Relais, MOSFETs, Transistoren oder ähnlichen Bauelementen realisiert werden.

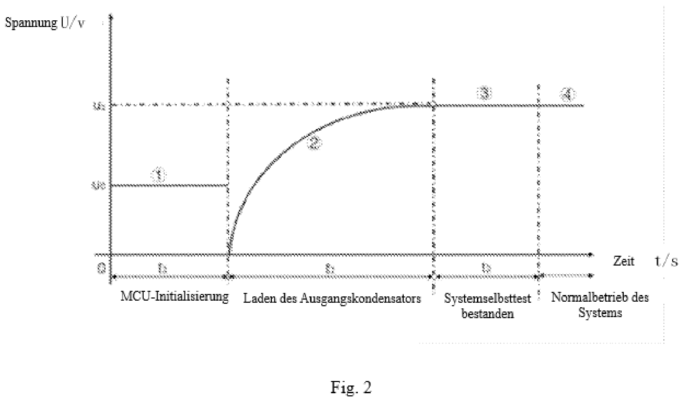

Fig. 2 zeigt ein Steuerungs-Zeitdiagramm zur Umsetzung der Steuerung durch das in Fig. 1 dargestellte herkömmliche Steuersystem. In Fig. 2 stellt die horizontale Achse die Zeit und die vertikale Achse die Spannung dar. In Fig. 2 stellt u0 die Betriebsspannung der MCU und u1 den vom System festgelegten Unterspannungsschwellenwert dar. Im Folgenden werden die Steueroperationen des in Fig. 1 dargestellten herkömmlichen Steuersystems in Verbindung mit Fig. 2 beschrieben.

Wie in Fig. 2 dargestellt, umfassen die vom in Fig. 1 gezeigten herkömmlichen Steuersystem implementierten Steuerungsvorgänge die folgenden Phasen S1-S5:
In Stufe S1 (in der Figur durch ① gekennzeichnet): Die MCU wird über die Versorgungsspannung VBAT (z. B. über das Bordnetz) mit Strom versorgt und beginnt mit der Initialisierung. Die Initialisierungszeit beträgt t1. Bei der Initialisierung werden verschiedene Komponenten der MCU (wie Register und Schnittstellen usw.) konfiguriert.
In Stufe S2: Die MCU konfiguriert die Schnittstelle so, dass das Steuersignal MCU_Start einen hohen Pegel ausgibt. Der zweite Leistungstransistor Q2 wird in Vorwärtsrichtung vorgespannt, gesättigt und leitend, wodurch der erste Leistungstransistor Q1 in Sperrrichtung vorgespannt, gesättigt und leitend wird. Basierend auf der Versorgungsspannung VBAT wird das Steuersignal V_FLTR_BATT über die erste Diode D1 und den ersten Widerstand R1 mit Strom versorgt, was anzeigt, dass die Initialisierung abgeschlossen ist.
In Stufe S3 (in der Figur durch ② gekennzeichnet): Das Steuersignal V_FLTR_BATT versorgt das Schaltmodul 121 im Ladesteuermodul 12 mit Strom, und das Steuersignal Control_Signal schaltet das Schaltmodul 121 ein und stellt dadurch die Ladespannung V_FLTR_BATT_PD zum Laden der Ausgangskondensatoren C1 und C2 bereit. Die Ladezeit beträgt t₂.
In Stufe S4 (in der Figur durch ③ gekennzeichnet): Wenn der Ausgangskondensator geladen ist (bestimmt durch die Feststellung, dass die Ladespannung V_FLTR_BATT_PD nicht niedriger als der vom System festgelegte Unterspannungsschwellenwert u1 ist), tritt das System in den Fehlerselbsttest ein. Die Selbsttestzeit des Systems beträgt t₃.
In Stufe S5 (in der Figur durch ④ gekennzeichnet): Wenn der Fehlerselbsttest abgeschlossen ist und keine weiteren Fehler vorliegen, funktioniert das System normal.

Dabei ist die Bearbeitungszeit der Stufe S2 vernachlässigbar. Auf dieser Grundlage kann die gesamte Startzeit T1 vom Einschalten der MCU bis zum normalen Betrieb des Systems wie folgt ausgedrückt werden: ${T}_{1} = {t}_{1} + {t}_{2} + {t}_{3}$

Aufgrund der gestiegenen funktionalen Sicherheitsanforderungen der internationalen Norm ISO26262 kann die Initialisierungszeit t1 durch die Auswahl einer MCU mit einer hohen Kernfrequenz reduziert werden. Bei Schaltkreisen mit großen Busströmen ist der Welligkeitsstrom der Wechselrichterschaltung groß, was einen größeren Ausgangskondensator erfordert, um die Welligkeit zu absorbieren, sodass die Ladedauer t2 zunimmt. Darüber hinaus sind während des redundanten Backup-Prozesses des Systems immer mehr Systemselbsttestinhalte und die gegenseitige Überprüfung redundanter Systeme erforderlich, was zu einer Verlängerung der Systemselbsttestzeit t3 führt. Wenn das Automobilsystem das Senden der ersten Frame-Nachricht über eine CAN-Anfrage erfordert, muss die Systemantwortzeit weniger als 500 ms betragen (wobei beispielsweise von 500 ms ausgegangen wird, da die Antwortzeiten verschiedener OEMs unterschiedlich sein können). Wenn die gesamte Startzeit T1 die vom System benötigte Zeit überschreitet, kann die Initialisierungszeit t1 nicht geändert werden. Der Ausgangskondensator kann nur durch wiederholtes Ein- und Ausschalten des Systems aufgeladen werden, sodass der Ausgangskondensator einen Teil der Energie behält, um die Ladedauer t2 zu verkürzen. Das System nimmt den Normalbetrieb erst wieder auf, wenn die Gesamtstartzeit den Systemanforderungen entspricht. Bei komplexen Automobilelektronikkomponenten kann diese technische Lösung den tatsächlichen Anforderungen nicht gerecht werden und ist nur auf einfache elektronische Systeme anwendbar.

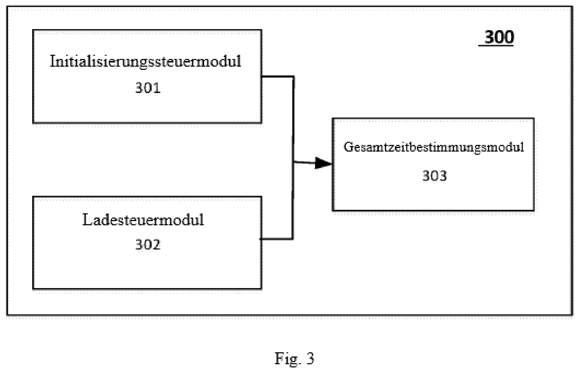

Fig. 3 zeigt ein schematisches Blockdiagramm eines Steuersystems gemäß einem Ausführungsbeispiel der vorliegenden Anmeldung. Wie in Fig. 3 gezeigt, umfasst das Steuersystem 300 gemäß einem Ausführungsbeispiel der vorliegenden Anmeldung: ein Initialisierungssteuermodul 301, das so konfiguriert ist, dass es die erste Zeit bestimmt, die die Motorsteuereinheit benötigt, um die Initialisierung nach dem Einschalten mit der Versorgungsspannung abzuschließen; ein Ladesteuermodul 302, das so konfiguriert ist, dass es die Zeit bestimmt, die die Ausgangskapazität der Motorsteuereinheit vom Beginn des Ladevorgangs bis zum vollständigen Laden benötigt, wobei der Ausgangskondensator bereits mit dem Laden beginnt, wenn die Motorsteuereinheit in die Initialisierung eintritt; und ein Gesamtzeitbestimmungsmodul 303, das so konfiguriert ist, dass es die längere der beiden Zeiten als Gesamtzeit verwendet, die die Motorsteuereinheit für die Initialisierung und das Laden des Ausgangskondensators benötigt.

Gemäß dem Steuersystem 300 eines Ausführungsbeispiels der vorliegenden Anmeldung wird die Gesamtzeit, die für die Initialisierung der Motorsteuereinheit und das Laden des Ausgangskondensators aufgewendet wird, reduziert, da der Ausgangskondensator bereits mit dem Laden beginnt, wenn die Motorsteuereinheit in die Initialisierung eintritt, wodurch die Systemanforderungen erfüllt werden.

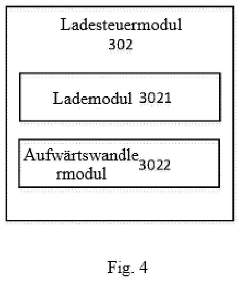

Fig. 4 zeigt ein schematisches Blockdiagramm eines Ladesteuermoduls gemäß einem Ausführungsbeispiel der vorliegenden Anmeldung. Wie in Fig. 4 gezeigt, umfasst das Ladesteuermodul 302 gemäß einem Ausführungsbeispiel der vorliegenden Anmeldung: ein Lademodul 3021, das so konfiguriert ist, dass es die Body-Diode des Leistungstransistors des Ladesteuermoduls 302 nutzt, um zu bewirken, dass die Versorgungsspannung den Ausgangskondensator zunächst auflädt und ihn auf eine erste Schwellenspannung bringt; und ein Aufwärtswandlermodul 3022, das so konfiguriert ist, dass es die Ladespannung des Ausgangskondensators durch das Lademodul 302 erhöht, sobald der Ausgangskondensator die erste Schwellenspannung erreicht, um eine erhöhte Spannung zu erhalten, wobei die erhöhte Spannung bewirkt, dass der Leistungstransistor vollständig leitend wird. Das Lademodul 3021 ist außerdem so konfiguriert, dass es den vollständig leitenden Leistungstransistor verwendet, um den Ausgangskondensator von der ersten Schwellenspannung an weiterhin mit der Versorgungsspannung zu laden, bis der Ladevorgang abgeschlossen ist, wobei die Summe aus der anfänglichen Ladezeit und der fortgesetzten Ladezeit die zweite Zeit ergibt, und wobei die Versorgungsspannung größer oder gleich der Durchlassspannung der Body-Diode des Leistungstransistors, aber kleiner als die vollständige Durchlassspannung des Leistungstransistors ist, und die erhöhte Spannung größer oder gleich der vollständigen Durchlassspannung des Leistungstransistors ist.

Gemäß dem Ladesteuermodul 302 eines Ausführungsbeispiels dieser Anmeldung ist das Laden des Ausgangskondensators in zwei Phasen unterteilt: die initiale Ladung mittels der Body-Diode des Leistungstransistors und die anschließende Weiterladung mittels des vollständig leitenden Leistungstransistors. Die Summe der Ladezeiten dieser beiden Phasen ergibt die Gesamtladedauer.

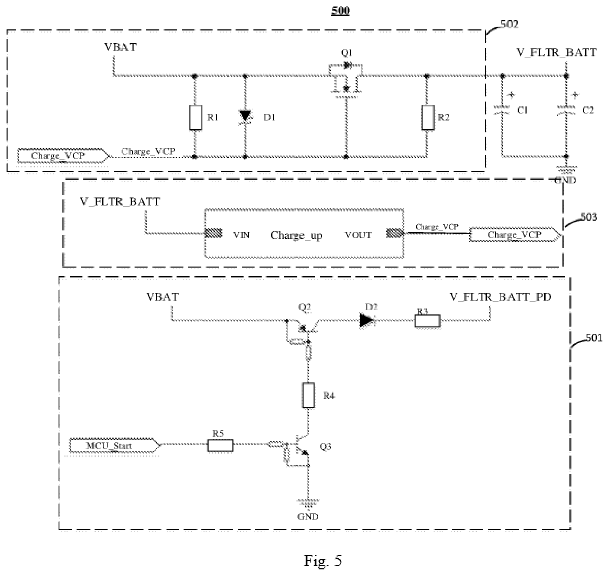

Fig. 5 zeigt ein schematisches Schaltbild eines Steuersystems gemäß einem Ausführungsbeispiel der vorliegenden Anmeldung. Wie in Fig. 5 dargestellt, umfasst das Steuersystem 500 gemäß einem Ausführungsbeispiel dieser Anmeldung: ein Initialisierungssteuermodul 501, das so konfiguriert ist, dass es die erste Zeit ermittelt, die die Motorsteuereinheit benötigt, um die Initialisierung nach dem Einschalten mit der Versorgungsspannung abzuschließen. Das Steuersystem 500 gemäß einem Ausführungsbeispiel dieser Anmeldung umfasst ferner ein Lademodul 502, das so konfiguriert ist, dass es die initiale Ladung des Ausgangskondensators mittels der Body-Diode des Leistungstransistors startet und ihn bis zu einer ersten Schwellenspannung auflädt; sowie ein Aufwärtswandlermodul 503, das so konfiguriert ist, dass es die Ladespannung des Ausgangskondensators durch das Lademodul 502 erhöht, sobald der Ausgangskondensator die erste Schwellenspannung erreicht hat, um eine erhöhte Spannung zu erzielen, wobei die erhöhte Spannung den Leistungstransistor vollständig leitend schaltet. Das Lademodul 502 ist so konfiguriert, dass es den vollständig leitenden Leistungstransistor verwendet, um den Ausgangskondensator von der ersten Schwellenspannung an mit der Versorgungsspannung weiter zu laden, bis der Ladevorgang abgeschlossen ist, wobei die Summe aus der anfänglichen Ladezeit und der fortgesetzten Ladezeit die zweite Zeit ergibt. Die Versorgungsspannung ist dabei größer oder gleich der Durchlassspannung der Body-Diode des Leistungstransistors, aber kleiner als die vollständige Durchlassspannung des Leistungstransistors, und die erhöhte Spannung ist größer oder gleich der vollständigen Durchlassspannung des Leistungstransistors. Das Lademodul 502 und das Aufwärtswandlermodul 503 können das in den Fig. 3 und 4 dargestellte Ladesteuermodul 302 realisieren.

Genauer gesagt umfasst das Lademodul 502, wie in Fig. 5 gezeigt, Folgendes: einen ersten Leistungstransistor Q1, der als Leistungstransistor verwendet wird und über einen ersten, einen zweiten und einen dritten Anschluss verfügt. Der erste Anschluss des ersten Leistungstransistors dient zum Empfang der Versorgungsspannung VBAT, der zweite Anschluss des ersten Leistungstransistors stellt die Ladespannung V_FLTR_BATT für den Ausgangskondensator bereit, und der dritte Anschluss dient zum Empfang der verstärkten Spannung Charge_VCP; der erste Widerstand R1 und die erste Diode D1, die parallel geschaltet sind, sind zwischen dem ersten und dem dritten Anschluss des ersten Leistungstransistors Q1 geschaltet, wobei die Anode der ersten Diode D1 mit dem ersten Anschluss des ersten Leistungstransistors Q1 verbunden ist und die Kathode der ersten Diode D1 mit dem dritten Anschluss des ersten Leistungstransistors Q1 verbunden ist; und der zweite Widerstand R2 ist zwischen dem zweiten und dem dritten Anschluss des ersten Leistungstransistors Q1 geschaltet.

In einigen Ausführungsbeispielen ist der erste Leistungstransistor Q1 ein Metall-Oxid-Halbleiter-MOSFET. Der erste Anschluss des ersten Leistungstransistors Q1 ist die Source des MOSFET, der zweite Anschluss ist der Drain des MOSFET, und der dritte Anschluss ist das Gate des MOSFET. In einigen Implementierungen ist der erste Leistungstransistor Q1 ein NMOS-Transistor.

Wie in Fig. 5 dargestellt, umfasst das Aufwärtswandlermodul 503: einen Eingangsanschluss VIN, der die vom zweiten Anschluss des ersten Leistungstransistors Q1 bereitgestellte Ladespannung V_FLTR_BATT empfängt; ein Umwandlungsmodul (Charge_up), das die Ladespannung V_FLTR_BATT erhöht; und einen Ausgangsanschluss VOUT, der die verstärkte Spannung Charge_VCP an den dritten Anschluss des ersten Leistungstransistors Q1 ausgibt.

In einigen Ausführungsbeispielen kann die erste Schwellenspannung der minimalen Betriebsspannung des Umwandlungsmoduls Charge_up entsprechen.

Wie in Fig. 5 dargestellt, umfasst das Initialisierungssteuermodul 501: einen zweiten Leistungstransistor Q2 mit drei Anschlüssen. Der erste Anschluss des zweiten Leistungstransistors Q2 empfängt die Versorgungsspannung VBAT, und der zweite Anschluss liefert über eine zweite Diode D2 und einen dritten Widerstand R3 das Signal V_FLTR_BATT_PD, das das abgeschlossene Initialisieren der Motorsteuereinheit signalisiert; sowie einen dritten Leistungstransistor Q3 mit drei Anschlüssen. Der erste Anschluss des dritten Leistungstransistors Q3 ist über einen vierten Widerstand R4 mit dem dritten Anschluss des zweiten Leistungstransistors Q2 verbunden, der zweite Anschluss ist mit Masse (GND) verbunden, und der dritte Anschluss empfängt über einen fünften Widerstand R5 das Signal MCU_Start, das den Start der Motorsteuereinheit signalisiert.

In einigen Ausführungsbeispielen ist der zweite Leistungstransistor Q2 ein PNP-Transistor, wobei der erste Anschluss des zweiten Leistungstransistors Q2 der Emitter des PNP-Transistors ist, der zweite Anschluss der Kollektor des PNP-Transistors und der dritte Anschluss die Basis des PNP-Transistors.

In einigen Ausführungsbeispielen ist der dritte Leistungstransistor Q3 ein NPN-Transistor, wobei der erste Anschluss des dritten Leistungstransistors Q3 der Kollektor des NPN-Transistors ist, der zweite Anschluss der Emitter des NPN-Transistors und der dritte Anschluss die Basis des NPN-Transistors.

In einigen Ausführungsbeispielen, wie in Fig. 5 gezeigt, kann der Ausgangskondensator Folgendes umfassen: einen ersten Kondensator C1 und einen zweiten Kondensator C2, die parallel zwischen dem zweiten Anschluss des ersten Leistungstransistors Q1 und Masse (GND) geschaltet sind. Es versteht sich, dass der Ausgangskondensator nicht darauf beschränkt ist, sondern aus mehr oder weniger Kondensatoren bestehen kann oder andere Verbindungsmethoden verwendet werden können.

Wie in Fig. 5 gezeigt, ist der Ausgangskondensator vollständig geladen, wenn die Ladespannung V_FLTR_BATT größer oder gleich der zweiten Schwellenspannung ist, wobei die zweite Schwellenspannung höher als die erste Schwellenspannung ist.

Es versteht sich, dass das Laden des Ausgangskondensators zwar beim Beginn der Initialisierung beginnt, um größtmögliche Zeit zu sparen, es aber auch denkbar ist, den Ladevorgang zu jedem Zeitpunkt des Initialisierungsprozesses zu starten, was die für die Initialisierung und das Laden erforderliche Gesamtzeit im Vergleich zu herkömmlichen Steuersystemen reduzieren kann.

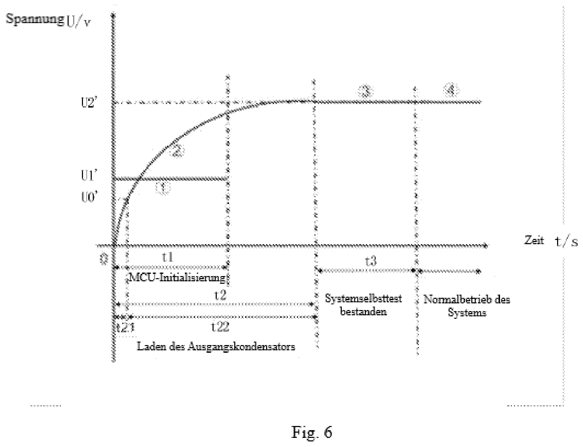

Fig. 6 zeigt ein Steuerungszeitdiagramm für die Steuerung, das von einem Steuersystem gemäß einem Ausführungsbeispiel der vorliegenden Anmeldung implementiert wird. In Fig. 6 stellt die horizontale Achse die Zeit und die vertikale Achse die Spannung dar, wobei u0' die minimale Betriebsspannung des Umwandlungsmoduls Charge_up des Aufwärtswandlermoduls 503 darstellt, u1' die Betriebsspannung der MCU angibt und u2' den vom System festgelegten Unterspannungsschwellenwert darstellt. Im Folgenden werden die von dem in Fig. 5 dargestellten Steuersystem implementierten Steueroperationen in Verbindung mit Fig. 6 beschrieben.

Wie in Fig. 6 dargestellt, umfassen die vom Steuersystem in Fig. 5 implementierten Steuervorgänge die folgenden Stufen S1-S4:
In Stufe S1 (in der Figur durch ① gekennzeichnet): Die MCU wird über die Versorgungsspannung VBAT (z. B. über das Bordnetz) mit Strom versorgt und beginnt mit der Initialisierung. Die Initialisierungszeit beträgt t₁. Bei der Initialisierung werden verschiedene Komponenten der MCU (wie Register und Schnittstellen usw.) konfiguriert. Die MCU konfiguriert die Schnittstellen so, dass das Steuersignal MCU_Start einen hohen Pegel ausgibt. Daraufhin wird der dritte Leistungstransistor Q3 vorwärts vorgespannt, gesättigt und leitend, anschließend wird der zweite Leistungstransistor Q2 rückwärts vorgespannt, gesättigt und leitend, woraufhin über die zweite Diode D2 und den dritten Widerstand R3 das Steuersignal V_FLTR_BATT_PD mit Strom versorgt wird, was signalisiert, dass die Initialisierung abgeschlossen ist. Gleichzeitig lädt das Lademodul 502 die Ausgangskondensatoren C1 und C2 zunächst über die Body-Diode des ersten Leistungstransistors Q1 mit der Versorgungsspannung VBAT. In dieser Phase beträgt die Ladezeit des Ausgangskondensators t21.
In Stufe S2 (in der Figur durch ② gekennzeichnet): Wenn die Ausgangskondensatoren C1 und C2 auf eine bestimmte Schwellenspannung (d. h. die minimale Betriebsspannung des Umwandlungsmoduls Charge_up des Aufwärtswandlermoduls 503) u0' geladen sind, wird die Ladespannung V_FLTR_BATT des Ausgangskondensators durch das Lademodul 502 dem Aufwärtswandlermodul 503 bereitgestellt. Das Aufwärtswandlermodul 503 erhöht die empfangene Ladespannung V_FLTR_BATT und gibt das verstärkte Spannungssignal Charge_VCP aus. Das erhöhte Spannungssignal Charge_VCP wird vom Lademodul 502 empfangen, wodurch der erste Leistungstransistor Q1 vollständig eingeschaltet wird, um die Ausgangskondensatoren C1 und C2 für einen Zeitraum t22 über den vollständig eingeschalteten ersten Leistungstransistor Q1 weiter zu laden.

Die Gesamtladezeit des Ausgangskondensators beträgt daher t2 ≈ t21 + t22, was durch die Stromdurchlassfähigkeit der Body-Diode des ersten Leistungstransistors Q1 bestimmt wird.

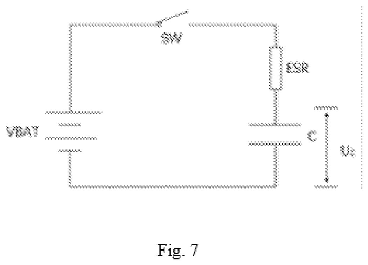

Insbesondere ist der Lade- und Entladevorgang des Ausgangskondensators nichtlinear. Im System kann der Lade- und Entladekreis dem in Fig. 7 gezeigten Schaltkreis entsprechen. In Fig. 7 stellt VBAT die Versorgungsspannung dar, SW stellt den Schalter dar, ESR stellt die äquivalente Impedanz im Stromkreis dar, C stellt die Kapazität dar und Uc stellt die Spannung am Ausgangskondensator C dar. Im obigen Vorladeschaltungsmodell kann die Spannung am Ausgangskondensator C durch Lösen einer linearen inhomogenen Differentialgleichung erster Ordnung ermittelt werden. Es wird angenommen, dass der Ausgangskondensator C im Anfangszustand keine Ladung enthält. Wenn der Schalter SW geschlossen ist, kann die folgende KVL-Gleichung (Kirchhoffsches Gesetz) aufgestellt werden: ${V}_{BAT} = ESR ∗ C \frac{{dU}_{C}}{dt} + {U}_{C}$

Wenn die Differentialgleichung gelöst wird, ergibt sich: ${U}_{c} = {V}_{BAT} - {V}_{BAT} ∗ {e}^{- \frac{t}{τ}}$, wobei *τ* = *ESR* * *C*.

Die äquivalente Gleichung lautet: ${U}_{c} = {V}_{BAT} {\left(1-{e}^{- \frac{t}{τ}}\right)}_{∘}$

Dies ist eine allgemeine Gleichung, die der exponentiellen Änderung der Momentanspannung während des Ladens des Ausgangskondensators entspricht, wobei Uc die Momentanspannung an den Anschlüssen des Ausgangskondensators darstellt und VBAT die Versorgungsspannung angibt.

Um nachfolgende Berechnungen und Analysen zu vereinfachen:
Wenn^{τ} = *ESR* * *C,* ist *U_{c}* = 0.63 * *V_{BAT}*;
Wenn^{τ} = 2*ESR* * *C*, ist *U_{c}* = 0.86 * *V_{BAT}*;
Wenn^{τ} = 3*ESR* * *C*, ist *U_{c}* = 0.95 * *V_{BAT}*;
Wenn^{τ} = 4*ESR* * *C*, ist *U_{c}* = 0.98 * *V_{BAT};*
Wenn^{τ} = 5*ESR* * *C*, ist *U_{c}* = 0.99 * *V_{BAT}*;

Die Ergebnisse zeigen, dass der Ladevorgang nach einer Zeitspanne von (3~5)τ grundsätzlich beendet ist.

In Stufe S3 (in der Figur durch ③ gekennzeichnet): Wenn erkannt wird, dass der Ausgangskondensator vollständig geladen ist (bestimmt durch die Feststellung, dass die Ladespannung V_FLTR_BATT nicht niedriger als der vom System festgelegte Unterspannungsschwellenwert u2' ist) und keine weiteren Fehler vorliegen, tritt das System in die Fehlerselbstprüfung ein. Die Selbsttestzeit des Systems beträgt t₃.

In Stufe S4 (in der Figur durch ④ gekennzeichnet): Wenn der Fehlerselbsttest abgeschlossen ist und keine anderen Fehler vorliegen, arbeitet die MCU normal.

Im obigen Prozess wird während der Initialisierungsphase der MCU der Ausgangskondensator gleichzeitig über die Body-Diode des ersten Leistungstransistors Q1 geladen; beide Vorgänge laufen parallel ab. Der Ladevorgang des Ausgangskondensators gliedert sich in zwei Phasen: In der ersten Phase erfolgt das Laden über die Body-Diode des ersten Leistungstransistors Q1, in der zweiten Phase erfolgt das Laden, nachdem der erste Leistungstransistor Q1 vollständig eingeschaltet ist. Die Gesamtladezeit des Ausgangskondensators beträgt t21+t22. Daher kann die gesamte Startzeit T2 vom Einschalten der MCU bis zum Normalbetrieb der MCU wie folgt ausgedrückt werden: ${T}_{2} = MAX \left\{{t}_{1}, {t}_{21}+{t}_{22}\right\} + {t}_{3} < {T}_{1}$

Das heißt, die Gesamtstartzeit wird im Vergleich zu herkömmlichen Lösungen verkürzt. Da Systeme immer komplexer werden, kann dieser Ansatz viel Startzeit einsparen, um die Systemanforderungen zu erfüllen.

Gemäß dem Steuersystem der Ausführungsform der vorliegenden Anmeldung ist die Schaltung einfach, die Hardwareschaltung ändert sich kaum und ist leicht umzusetzen; sie unterliegt nicht der Zeitsteuerung der MCU und wird durch Hardware ausgeführt, wodurch der Einsatz von Softwareressourcen reduziert wird. Darüber hinaus kann das Steuersystem gemäß der Ausführungsform der vorliegenden Anmeldung in Schaltkreisen verwendet werden, die Ausgangskondensatoren mit hoher Kapazität enthalten. Es ist hoch kompatibel und kann in einem breiten Anwendungsbereich eingesetzt werden.

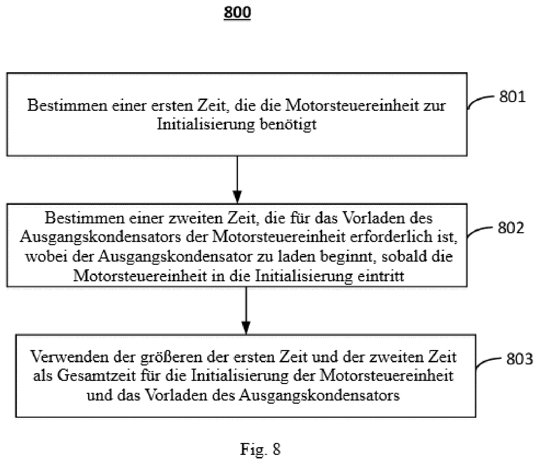

Fig. 8 zeigt ein schematisches Flussdiagramm eines Steuerverfahrens gemäß einer Ausführungsform der vorliegenden Anmeldung. Wie in Fig. 8 gezeigt, umfasst das Steuerverfahren 800 gemäß der Ausführungsform der vorliegenden Anmeldung:
Schritt S801: Bestimmen der ersten Zeit, die die Motorsteuereinheit vom Einschalten mit der Versorgungsspannung bis zum Abschluss der Initialisierung benötigt;
Schritt S802: Bestimmen der zweiten Zeit, die der Ausgangskondensator der Motorsteuereinheit vom Beginn des Ladevorgangs bis zum vollständigen Laden benötigt, wobei der Ladevorgang des Ausgangskondensators bereits beim Eintritt der Motorsteuereinheit in den Initialisierungsmodus beginnt; und
Schritt S803: Die größere der beiden Zeiten wird als Gesamtzeit für die Initialisierung der Motorsteuereinheit und das Laden des Ausgangskondensators verwendet.

Gemäß dem Steuerverfahren 800 dieser Ausführungsform beginnt der Ladevorgang des Ausgangskondensators mit dem Eintritt der Motorsteuereinheit in die Initialisierung. Dadurch verkürzt sich die Gesamtzeit für die Initialisierung der Motorsteuereinheit und das Laden des Ausgangskondensators, wodurch die Systemanforderungen erfüllt werden.

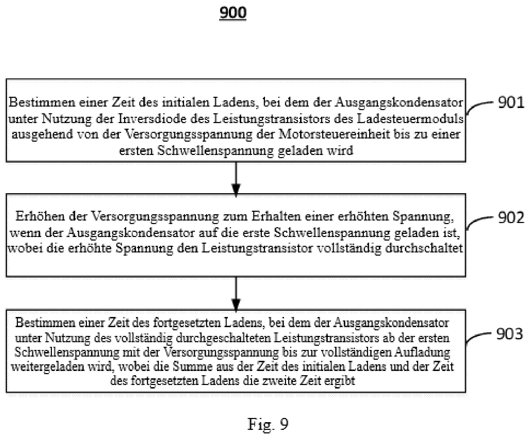

Fig. 9 zeigt ein Flussdiagramm zur Bestimmung der Ladezeit des Ausgangskondensators gemäß dem Steuerverfahren der Ausführungsform der vorliegenden Anmeldung. Wie in Fig. 9 dargestellt, kann die Bestimmung der zweiten Zeit (d. h. der Ladezeit des Ausgangskondensators) im Rahmen des Steuerverfahrens 800 gemäß einer Ausführungsform dieser Anmeldung (siehe Fig. 8) in einigen Ausführungsformen Folgendes umfassen:
Schritt S901: Die Body-Diode des Leistungstransistors des Ladesteuermoduls wird verwendet, um den Ausgangskondensator mit der Versorgungsspannung zunächst zu laden und bis zur ersten Schwellenspannung aufzuladen;
Schritt S902: Sobald der Ausgangskondensator auf die erste Schwellenspannung geladen ist, wird die Ladespannung des Ausgangskondensators durch das Lademodul erhöht, um eine verstärkte Spannung zu erzeugen, wobei diese Spannung den Leistungstransistor vollständig einschaltet; und
Schritt S903: Der vollständig eingeschaltete Leistungstransistor lädt den Ausgangskondensator ab der ersten Schwellenspannung mit der Versorgungsspannung weiter, bis der Ladevorgang abgeschlossen ist.

Die Summe aus der anfänglichen Ladezeit und der fortgesetzten Ladezeit ergibt die zweite Zeit, wobei die Versorgungsspannung größer oder gleich der Durchlassspannung der Body-Diode des Leistungstransistors, aber kleiner als die vollständige Durchlassspannung des Leistungstransistors ist, und die erhöhte Spannung größer oder gleich der vollständigen Durchlassspannung des Leistungstransistors ist.

In einigen Ausführungsformen kann das Steuerverfahren 800 gemäß einer Ausführungsform der vorliegenden Anmeldung ferner Folgendes umfassen: die Bestimmung, ob das Laden des Ausgangskondensators abgeschlossen ist, basierend auf einem Vergleich der Ladespannung mit einer zweiten Schwellenspannung, wobei die zweite Schwellenspannung höher als die erste Schwellenspannung ist.

Gemäß dem Steuerverfahren zum Laden des Ausgangskondensators gemäß einer Ausführungsform der vorliegenden Anmeldung wird während des Initialisierungsprozesses des Steuersystems die Body-Diode des Leistungstransistors des Schaltmoduls zum Laden des Ausgangskondensators verwendet. Wenn der Ausgangskondensator einen vorgegebenen Wert erreicht hat, wird das periphere Steuersignal so aktiviert, dass der Leistungstransistor des Schaltmoduls vollständig leitend wird, und der Ausgangskondensator wird weiter aufgeladen, bis er vollständig geladen ist. Auf Grundlage dieses Verfahrens lassen sich die Zeit für die Systeminitialisierung und das Laden des Ausgangskondensators verkürzen. Dadurch wird die Anlaufzeit des Steuersystems reduziert und die Systemanforderungen können erfüllt werden.

Gemäß Ausführungsformen dieser Anmeldung können die oben beschriebenen Steuersysteme 300, 400, 500 und Steuerverfahren 800, 900 in eine Motorsteuereinheit integriert werden.

Fachleute auf diesem Gebiet werden verstehen, dass die vorliegende Anmeldung nicht auf die oben beschriebenen und in den Zeichnungen dargestellten spezifischen Strukturen und Schritte beschränkt ist. Der Übersichtlichkeit halber wird hier auf eine Beschreibung bekannter Strukturen und Verfahren verzichtet. In den obigen Ausführungsbeispielen sind mehrere spezifische Schritte lediglich als Beispiele beschrieben und dargestellt. Das Verfahren der vorliegenden Anmeldung ist jedoch nicht auf die beschriebenen und dargestellten spezifischen Schritte beschränkt. Fachleute auf diesem Gebiet können innerhalb des Schutzumfangs der Anmeldung verschiedene Änderungen, Modifikationen und Ergänzungen an den Ausführungsbeispielen vornehmen oder die Reihenfolge der Schritte ändern.

Die oben offenbarten Inhalte stellen lediglich einige konkrete Ausführungsformen der vorliegenden Anmeldung dar. Fachleute auf diesem Gebiet können erkennen, dass der Schutzumfang der vorliegenden Anmeldung nicht darauf beschränkt ist. Innerhalb des in der Anmeldung offenbarten technischen Bereichs können verschiedene gleichwertige Modifikationen oder Ersatzvorrichtungen vorgenommen werden, und alle diese gleichwertigen Modifikationen oder Ersatzvorrichtungen fallen unter den Schutzumfang der vorliegenden Anmeldung.

## Patentansprüche

1. Ein Steuersystem, umfassend:
ein Initialisierungssteuermodul, das dazu konfiguriert ist, eine erste Zeit zu bestimmen, die eine Motorsteuereinheit vom Einschalten mit einer Versorgungsspannung bis zum Abschluss einer Initialisierung benötigt;
ein Ladesteuermodul, das dazu konfiguriert ist, eine zweite Zeit zu bestimmen, die ein Ausgangskondensator der Motorsteuereinheit vom Beginn eines Ladevorgangs bis zum vollständigen Aufladen benötigt, wobei der Ladevorgang bereits beim Eintritt der Motorsteuereinheit in die Initialisierung beginnt; und
ein Gesamtzeitbestimmungsmodul, das dazu konfiguriert ist, die größere der ersten Zeit und der zweiten Zeit als Gesamtzeit für die Initialisierung der Motorsteuereinheit und das Laden des Ausgangskondensators zu verwenden.

2. Das Steuersystem nach Anspruch 1, wobei das Ladesteuermodul Folgendes umfasst:
ein Lademodul, das dazu konfiguriert ist, eine Body-Diode eines Leistungstransistors des Ladesteuermoduls zu nutzen, um den Ausgangskondensator mit der Versorgungsspannung initial zu laden, bis eine erste Schwellenspannung erreicht ist; und
ein Aufwärtswandlermodul, das dazu konfiguriert ist, eine Ladespannung des Ausgangskondensators zu erhöhen, wenn dieser auf die erste Schwellenspannung geladen ist, wodurch eine angehobene Spannung erzeugt wird, die den Leistungstransistor vollständig leitend macht; wobei
das Lademodul weiterhin dazu konfiguriert ist, den Ausgangskondensator ab der ersten Schwellenspannung mithilfe des vollständig eingeschalteten Leistungstransistors mit der Versorgungsspannung weiterhin zu laden, bis dieser vollständig geladen ist;
wobei die zweite Zeit durch die Summe aus anfänglicher und fortgesetzter Ladezeit bestimmt wird, und wobei die Versorgungsspannung größer oder gleich der Durchlassspannung der Inversdiode des Leistungstransistors, jedoch kleiner als dessen vollständige Durchlassspannung ist, und die angehobene Spannung größer oder gleich der vollständigen Durchlassspannung des Leistungstransistors ist.

3. Das Steuersystem nach Anspruch 2, wobei das Lademodul Folgendes umfasst:
einen ersten Leistungstransistor, der als der Leistungstransistor dient und einen ersten, einen zweiten und einen dritten Anschluss aufweist, wobei der erste Anschluss zum Empfangen der Versorgungsspannung dient, der zweite Anschluss die Ladespannung für den Ausgangskondensator liefert, und der dritte Anschluss zum Empfangen der angehobenen Spannung dient;
einen ersten Widerstand und eine erste Diode, die parallel geschaltet zwischen dem ersten und dritten Anschluss des ersten Leistungstransistors angeordnet sind, wobei die Anode der ersten Diode mit dem ersten Anschluss und die Kathode mit dem dritten Anschluss des ersten Leistungstransistors verbunden ist; sowie
einen zweiten Widerstand, der zwischen dem zweiten und dem dritten Anschluss des ersten Leistungstransistors geschaltet ist.

4. Das Steuersystem nach Anspruch 3, wobei der erste Leistungstransistor ein Metall-Oxid-Halbleiter-Transistor (MOS-Transistor) ist, wobei der erste Anschluss des ersten Leistungstransistors die Source, der zweite Anschluss der Drain und der dritte Anschluss das Gate des MOS-Transistors ist.

5. Das Steuersystem nach Anspruch 4, wobei der erste Leistungstransistor ein NMOS-Transistor ist.

6. Das Steuersystem nach Anspruch 3, wobei das Aufwärtswandlermodul Folgendes umfasst:
einen Eingangsanschluss, der dazu konfiguriert ist, die vom zweiten Anschluss des ersten Leistungstransistors bereitgestellte Ladespannung zu empfangen;
ein Wandlermodul, das dazu konfiguriert ist, eine Aufwärtswandlung der Ladespannung durchzuführen; und
einen Ausgangsanschluss, der dazu konfiguriert ist, die verstärkte Spannung an den dritten Anschluss des ersten Leistungstransistors auszugeben.

7. Das Steuersystem nach Anspruch 6, wobei die erste Schwellenspannung die minimale Betriebsspannung des Wandlermoduls ist.

8. Das Steuersystem nach Anspruch 6, wobei das Initialisierungssteuermodul Folgendes umfasst:
einen zweiten Leistungstransistor, der einen ersten, einen zweiten und einen dritten Anschluss aufweist, wobei der erste Anschluss zur Versorgung mit der Versorgungsspannung dient, und der zweite Anschluss über eine zweite Diode und einen dritten Widerstand ein Signal an die Motorsteuereinheit sendet, um die Initialisierung abzuschließen; und
einen dritten Leistungstransistor, der einen ersten, einen zweiten und einen dritten Anschluss aufweist, wobei der erste Anschluss über einen vierten Widerstand mit dem dritten Anschluss des zweiten Leistungstransistors verbunden ist, der zweite Anschluss geerdet ist, und der dritte Anschluss über einen fünften Widerstand ein Startsignal an die Motorsteuereinheit empfängt.

9. Das Steuersystem nach Anspruch 8, wobei der zweite Leistungstransistor ein PNP-Transistor ist, dessen erster Anschluss der Emitter, dessen zweiter Anschluss der Kollektor und dessen dritter Anschluss die Basis des PNP-Transistors ist.

10. Das Steuersystem nach Anspruch 8, wobei der dritte Leistungstransistor ein NPN-Transistor ist, dessen erster Anschluss der Kollektor, dessen zweiter Anschluss der Emitter und dessen dritter Anschluss die Basis des NPN-Transistors ist.

11. Das Steuersystem nach Anspruch 3, wobei der Ausgangskondensator einen ersten und einen zweiten Kondensator umfasst, die parallel zwischen dem zweiten Anschluss des ersten Leistungstransistors und Masse geschaltet sind.

12. Das Steuersystem nach Anspruch 2, wobei der Ausgangskondensator vollständig geladen ist, sobald die Ladespannung eine zweite Schwellenspannung erreicht oder überschreitet, wobei die zweite Schwellenspannung höher als die erste Schwellenspannung ist.

13. Eine Motorsteuereinheit, umfassend: das Steuersystem gemäß einem der Ansprüche 1 bis 12.

14. Ein Steuerverfahren, umfassend:
Bestimmen einer ersten Zeit, die eine Motorsteuereinheit benötigt, um eine Initialisierung nach dem Einschalten mit einer Versorgungsspannung abzuschließen;
Bestimmen einer zweiten Zeit, die ein Ausgangskondensator der Motorsteuereinheit benötigt, um ab Ladebeginn vollständig geladen zu sein, wobei der Ladevorgang des Ausgangskondensators mit dem Eintritt der Motorsteuereinheit in den Initialisierungsprozess beginnt; und
Verwenden der größeren der beiden Zeiten als Gesamtzeit für die Initialisierung der Motorsteuereinheit und das Laden des Ausgangskondensators.

15. Steuerverfahren nach Anspruch 14, wobei das Bestimmen der zweiten Zeit Folgendes umfasst:
Nutzen einer Body-Diode eines Leistungstransistors in einem Ladesteuermodul, um den Ausgangskondensator mit der Versorgungsspannung initial zu laden und bis zu einer ersten Schwellenspannung aufzuladen;
Erhöhen einer Ladespannung des Lademoduls am Ausgangskondensator, sobald dieser die erste Schwellenspannung erreicht hat, um eine verstärkte Spannung zu erzielen, wobei die verstärkte Spannung bewirkt, dass der Leistungstransistor vollständig durchschaltet;
Laden des Ausgangskondensators mithilfe des vollständig eingeschalteten Leistungstransistors, beginnend mit der ersten Schwellenspannung, mit der Versorgungsspannung, bis er vollständig geladen ist;
wobei die zweite Zeit durch die Summe aus anfänglicher und fortgesetzter Ladezeit bestimmt wird, und wobei die Versorgungsspannung größer oder gleich der Durchlassspannung der Inversdiode des Leistungstransistors, jedoch kleiner als dessen vollständige Durchlassspannung ist, und die angehobene Spannung größer oder gleich der vollständigen Durchlassspannung des Leistungstransistors ist.

16. Das Steuerverfahren nach Anspruch 15, ferner umfassend: Feststellen, ob die Ladung des Ausgangskondensators abgeschlossen ist, basierend auf einem Vergleich der Ladespannung mit einer zweiten Schwellenspannung, wobei die zweite Schwellenspannung höher ist als die erste Schwellenspannung.
